# EUROPÄISCHE PATENTSCHRIFT

(11) **EP 2 659 763 B1**
(45) Veröffentlichungstag und Bekanntmachung des Hinweises auf die Patenterteilung: **23.09.2015**
(21) Anmeldenummer: 13155036.0
(22) Anmeldetag: 13.02.2013
(51) Int. Cl.: A01D 90/04, A01F 15/10

(54) **Erntemaschine mit einer Schneidvorrichtung**
Harvesting machine with a cutting device
Machine de récolte dotée d'un dispositif de coupe

(30) Priorität: 03.05.2012 DE 102012008722; 15.10.2012 DE 102012109773
(43) Veröffentlichungstag der Anmeldung: 06.11.2013
(73) Patentinhaber: Usines Claas France S.A.S, 57140 Metz (FR)
(72) Erfinder: Birkhofer, Stefan, 78333 Stocknach (DE)
(74) Vertreter: Belda, Stefan Johannes

(56) Entgegenhaltungen:
- EP-A1- 0 204 967
- EP-A2- 1 062 860
- DE-A1- 19 546 263
- DE-A1- 19 841 598
- DE-C1- 3 711 355
- US-A1- 2008 028 737

## Beschreibung

Die Erfindung betrifft eine Erntemaschine, insbesondere eine Ballenpresse oder einen Ladewagen mit einer Schneidvorrichtung für landwirtschaftliches Erntegut gemäß dem Oberbegriff des Anspruchs 1.

Eine Vorrichtung mit den Merkmalen des Oberbegriffs der Anspruchs 1 ist aus der US-A-20080028737 bekannt.

Landwirtschaftliche Ballenpressen oder Ladewagen sind oftmals mit einer Schneidvorrichtung - auch "Schneidwerk" genannt - für der Maschine zugeführtes Halm- und/oder Blattgut (im Folgenden vereinfacht: "Erntegut") ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Kanal der Ballenpresse, des Ladewagens oder sonstigen landwirtschaftlichen Maschine so angeordnet, dass das Erntegut auf eine in den Kanal hineinragende Anzahl feststehender Messer zu gefördert wird, um in Kontakt mit den Messerkanten geschnitten zu werden. Im Fall von Ballenpressen und Ladewagen wird die Förderung des Ernteguts im Wirkungsbereich der Messer durch einen Rotor bewirkt, der sich um eine quer zur Gutstromrichtung liegende Achse dreht und in Axialrichtung zumeist mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen. Durch einen kämmenden Eingriff des Rotors mit den in den Erntegutkanal hineinragenden Messern wird das Erntegut zerkleinert, insbesondere geschnitten.

In Bezug auf den durchströmten Erntegutkanal weisen die Schneidvorrichtungen demnach eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel und zur Ermöglichung einer Auswahl einer gewünschten Messeranzahl ist es üblich, die Messer derart gegenüber einem Messerträger der Schneidvorrichtung zu lagern, dass sich jedes Messer zwischen zumindest einer Betriebsposition und einer Außerbetriebsposition verstellen lässt. In der Betriebsposition befindet sich das Messer dabei in einer Stellung, in der es so in den Erntegutkanal hineinragt, dass vorbeiströmendes Erntegut in Zusammenwirkung mit dem Messer zerkleinert wird. In der Außerbetriebsposition befindet sich das Messer dagegen in einer Stellung, in der es aus dem Erntegutkanal weitestgehend zurückgezogen ist, das Erntegut also nicht schneidet. Der die Messer aufnehmende Messerträger ist üblicherweise durch ein rahmenfestes Gutleitelement, in der Regel ein gekrümmtes Bodenblech, vom Erntegutkanal getrennt, wobei in dem Gutleitelement eine der Messerzahl entsprechende Anzahl von schlitzartigen Ausnehmungen ausgebildet ist, durch welche ausgewählte Messer in den Erntegutkanal hineinragen können. Durch Absenken und seitliches Herausziehen des Messerträgers ist es möglich, sich zu Wartungs- und/oder Reparaturzwecken Zugang zu den Messern zu verschaffen. Ein Zugang zu dem im Erntegutkanal angeordneten Rotor ist jedoch kaum möglich. Insbesondere im Fall von Erntegutstauungen, die beispielsweise im Überlastfall auftreten, lässt sich blockierendes Erntegut nur mit hohem Aufwand aus dem Erntegutkanal entfernen. Auch eine Wartung des Rotors ist mit bekannten Bauweisen sehr aufwändig.

Es ist daher eine Aufgabe der vorliegenden Erfindung, eine mit einer Schneidvorrichtung ausgestattete Erntemaschine anzugeben, die zum Zweck der Wartung und des Entfernens von Erntegutansammlungen einen einfachen Zugang zu dem im Erntegutkanal befindlichen Rotor gewährleistet.

Die genannte Aufgabe wird gelöst durch eine Erntemaschine mit den Merkmalen des Anspruchs 1. Diese zeichnet sich dadurch aus, dass das Gutleitelement um eine quer zum Erntegutkanal verlaufende Schwenkachse aus einer den Erntegutkanal verschließenden Position in eine geöffnete Position verschwenkbar ist, die einen Zugang zu dem Rotor ermöglicht. Erfindungsgemäß wurde zunächst erkannt, dass das Gutleitelement, durch welches die Messer in den Erntegutkanal hineinragen und welches somit eine Begrenzung des Erntegutkanals darstellt, den Zugang zu dem Rotor der Schneidvorrichtung behindert. Insbesondere wurde erkannt, dass sich dieses Gutleitelement damit auf besondere Weise eignet, einen Zugang zu dem Rotor bzw. zu dem entsprechenden Abschnitt des Erntegutkanals zu ermöglichen, indem das Gutleitelement zu Wartungs- und/oder Reparaturzwecken aus einer den Erntegutkanal verschließenden Position in eine geöffnete Position verschwenkbar gelagert ist, die einen Zugang zu dem Rotor ermöglicht. Durch die Verschwenkbarkeit des Gutleitelements ist das Öffnen und Schließen besonders bedienfreundlich, da keine Teile ab- bzw. nachträglich wieder anzubauen sind. Das Gutleitelement und ein die Messer haltender Tragrahmen sind um eine gemeinsame Achse schwenkbar jeweils gegenüber dem Maschinenrahmen der Erntemaschine gelagert. Eine solche mögliche Verschwenkung um eine gemeinsame Achse bietet zunächst den konstruktiven Vorzug eines einfachen kinematischen Aufbaus aufgrund nur einer Schwenkachse für zwei Bauteile. Weiterhin ergibt sich der Vorteil, dass das Gutleitelement und der die Messer haltende Tragrahmen bedarfsweise gemeinsam oder separat verschwenkt werden können. Die zuvor genannte Aufgabe wird so mit einfachen Mitteln gelöst.

Zweckmäßigerweise handelt es sich bei dem Gutleitelement um ein den Erntegutkanal nach unten - zumindest abschnittsweise - begrenzendes Bodenblech. Eine Verschwenkbarkeit dieses Bodenblechs bietet neben der guten Zugänglichkeit den Vorteil, dass bei dessen Öffnen im Erntegutkanal angesammeltes Erntegut schwerkraftbedingt von selbst nach unten aus dem Erntegutkanal herausfällt. Damit können Erntegutansammlungen besonders einfach beseitigt werden, der Zugang zu dem oberhalb des Bodenblech befindlichen Rotor wird auf besonders komfortable Weise geschaffen.

Ganz unabhängig von dessen sonstiger Gestaltung ist vorteilhaft das Gutleitelement in der den Erntegutkanal verschließenden Position arretierbar. Verschiedene Möglichkeiten der Arretierung sind denkbar. Beispielsweise kann am Maschinenrahmen eine mit dem Gutleitelement in Eingriff bringbare Feststelleinrichtung vorgesehen sein, die das Gutleitelement in der verschließenden Position festhalten kann, jedoch bedarfsweise lösbar ist.

Gemäß einer vorteilhaften Weiterbildung der Erfindung befindet sich die Schwenkachse des Gutleitelements in einem bezogen auf die Gutstromrichtung durch den Erntegutkanal vorderen Bereich des Gutleitelements. Hierdurch ist vorteilhaft gewährleistet, dass das Gutleitelement im Fall von Überlastungen des Erntegutkanals, insbesondere verursacht durch übermäßige Ansammlung von Erntegut, eine öffnende Bewegung des Gutleitelements im Sinne eines ausweichenden Verschwenkens aus der verschließenden Position in die geöffnete Position durchführen kann.

Vorteilhaft hält dabei der Tragrahmen einen die Vielzahl von Messern aufnehmenden Messerträger zu der gemeinsamen Schwenkachse von Gutleitelement und Tragrahmen derart beabstandet, dass der Messerträger durch Verschwenken des Tragrahmens zwischen einem Eingriffszustand und einem Wartungszustand verschwenkbar ist. Mit anderen Worten ist der Messerträger mittels des Tragrahmens hebelartig gegenüber der Schwenkachse gelagert und kann so aus einem Eingriffszustand, bei dem die Messer in den Erntegutkanal hineinragen können, in einen Wartungszustand bewegt werden, in dem der Messerträger weiter vom Erntegutkanal entfernt liegt, um beispielsweise zum Zweck des Messeraustauschs oder der Reinigung des Messerträgers einfacheren Zugang zu diesem zu schaffen.

Ein bevorzugte Weiterbildung der Erntemaschine sieht vor, dass der Tragrahmen mittels einer geeigneten Aktorik, vorzugsweise mittels paarweise zwischen dem Maschinenrahmen und dem Tragrahmen wirkenden hydraulischen Stellzylindern, aus dem Eingriffszustand in den Wartungszustand und umgekehrt verschwenkbar ist. Ein solche Aktorik, die prinzipiell auf unterschiedliche Weise umgesetzt sein kann, gewährleistet, dass sich die Verstellung des Messerträgers zwischen dem Eingriffszustand und dem Wartungszustand für einen Maschinenbediener ohne Kraftaufwand, beispielsweise ferngesteuert von einem Bedienterminal, durchführen lässt.

Zur Schaffung flexibler Wartungsmöglichkeiten sind vorteilhaft der Tragrahmen mitsamt davon gehaltenem Messerträger und das Gutleitelement voneinander entkoppelt um die gemeinsame Achse verschwenkbar. Damit kann wahlweise nur der Tragrahmen (mit Messerträger) oder nur das Gutleitelement verschwenkt werden, wodurch je nach Einsatzfall wahlweise einfacher Zugang zu den Messern oder zum Erntegutkanal bzw. dem darin befindlichen Rotor geschaffen werden kann.

Zur erleichterten Betätigung, insbesondere bei Vorhandensein einer zuvor genannten Aktorik des Tragrahmens, sind der Tragrahmen mitsamt davon gehaltenem Messerträger und das Gutleitelement aber auch miteinander verbindbar, um als Einheit gemeinsam um die Achse verschwenkbar zu sein. Demnach können der Tragrahmen des Messerträgers und das Gutleitelement miteinander verbunden werden, so dass eine vorhandene Aktorik auf für den Bediener komfortable Weise beide Bauteile gemeinsam bewegen kann.

Der Zugang zu den Messern wird auf besonders vorteilhafte Weise dadurch erleichtert, dass der Messerträger in einer sich quer zum Erntegutkanal erstreckenden Richtung linear beweglich gelagert ist, so dass der Messerträger aus einer bezogen auf den Erntegutkanal mittigen Position beidseitig in jeweils davon seitliche Positionen bewegbar ist, in denen der Messerträger jeweils zumindest zur Hälfte aus dem Erntegutkanal hinausragt. Der Messerträger kann demnach seitlich verschiebbar gegenüber dem Tragrahmen gelagert sein. Durch die beidseitige Beweglichkeit ist ein besonders einfacher Zugang zu den Messern möglich, ohne dass übermäßige Haltekräfte auftreten und ohne dass seitlich übermäßig viel Platz benötigt wird. Eine besonders vorteilhafte Weiterbildung sieht vor, dass der Messerträger im verschobenen Zustand beidseitig zu etwa 60% seiner eigenen Breite aus dem Erntegutkanal herausragt, da sich gezeigt hat, dass sich mit einer solchen Gestaltung auch bei verhältnismäßig leichtem Aufbau des tragenden Rahmens eine hinreichende Zugänglichkeit erzielen lässt.

Gemäß einer weiterhin vorteilhaften Ausgestaltung der Erfindung sind das Gutleitelement und/oder der vom Tragrahmen gehaltene Messerträger als austauschbare Komponenten ausgeführt. Beispielsweise könnte so auf einfache Weise ein Umrüsten auf andere Messerzahl erfolgen, indem nämlich das Gutleitelement und der Messerträger (mitsamt Messern) durch ein Gutleitelement und einen Messerträger ersetzt werden, die eine andere Messerzahl aufweisen. Ebenso kann so auf besonders schnelle Weise ein verschleißbedingter Austausch des Gutleitelements und/oder des Messerträgers vorgenommen werden, beispielsweise um die Ernte schnell fortsetzen zu können.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht,
- Fig. 2: eine Schneidvorrichtung einer Ballenpresse in perspektivischer Ansicht, wobei sich deren Bodenblech in geschlossener Position befindet,
- Fig. 3: die Schneidvorrichtung gemäß Fig. 2, wobei ein den Messerträger haltender Tragrahmen in einen Wartungszustand verschwenkt ist,
- Fig. 4: die Schneidvorrichtung gemäß Fig. 3, wobei zusätzlich das Bodenblech in eine geöffnete Position verschwenkt ist,
- Fig. 5: die Schneidvorrichtung gemäß Fig. 3, wobei der Messerträger in eine linke Position bewegt wurde,
- Fig. 6: die Schneidvorrichtung der Fig. 3, wobei der Messerträger in eine rechte Position bewegt wurde.

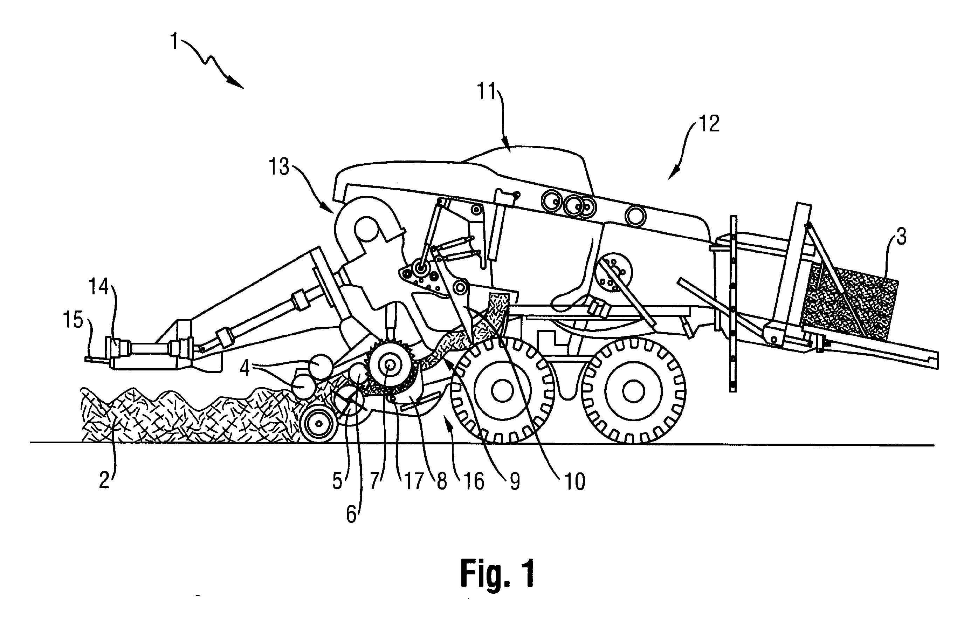

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zu einem nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine schematisch dargestellte Schneidvorrichtung 16 angeordnet. Die Schneidvorrichtung 16 weist im Wesentlichen eine Vielzahl von Messern 8 auf, die in Bezug auf den Zuführkanal 9 quer zur Förderrichtung des Ernteguts 2 nebeneinander angeordnet sind. Demzufolge ist nur ein in der Zeichnungsansicht vorderes (in Fahrtrichtung der Presse 1 gesehen linkes) Messer 8 der Schneidvorrichtung 16 zu sehen, das - wie auch die übrigen Messer 8 - um eine quer zur Gutförderrichtung verlaufende Messerachse 17 verschwenkbar ist. Jedes Messer 8 ist so zwischen einer Außerbetriebsposition, in der es nicht in den Erntegutkanal hineinragt, und einer Betriebsposition verschwenkbar, in der es in den Erntegutkanal hineinragt. Befindet sich ein Messer 8 (bzw. eine Vielzahl oder sämtliche der Messer 8) in der Betriebsposition, so wird das den Zuführkanal 9 durchströmende Erntegut 2 durch kämmende Zusammenwirkung von Rotor 7 (dessen Rotorsternen) und dem jeweiligen Messer 8 zerkleinert, insbesondere geschnitten.

Nach Passieren der Schneidvorrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertig zu stellen. Heckseitig der Ballenpresse 1 erfolgt anschließend der Ballenabwurf.

Frontseitig der Ballenpresse 1 befindet sich eine Zugdeichsel 15, mit der die Ballen- ' presse 1 von einem Zugfahrzeug wie einem Traktor (nicht dargestellt) gezogen und von diesem angetrieben wird. Zum Antrieb der Förder- und Verarbeitungseinrichtungen der Ballenpresse 1 dient eine mit dem Traktor koppelbare Hauptantriebswelle 14, die in ein Hauptgetriebe 13 mündet.

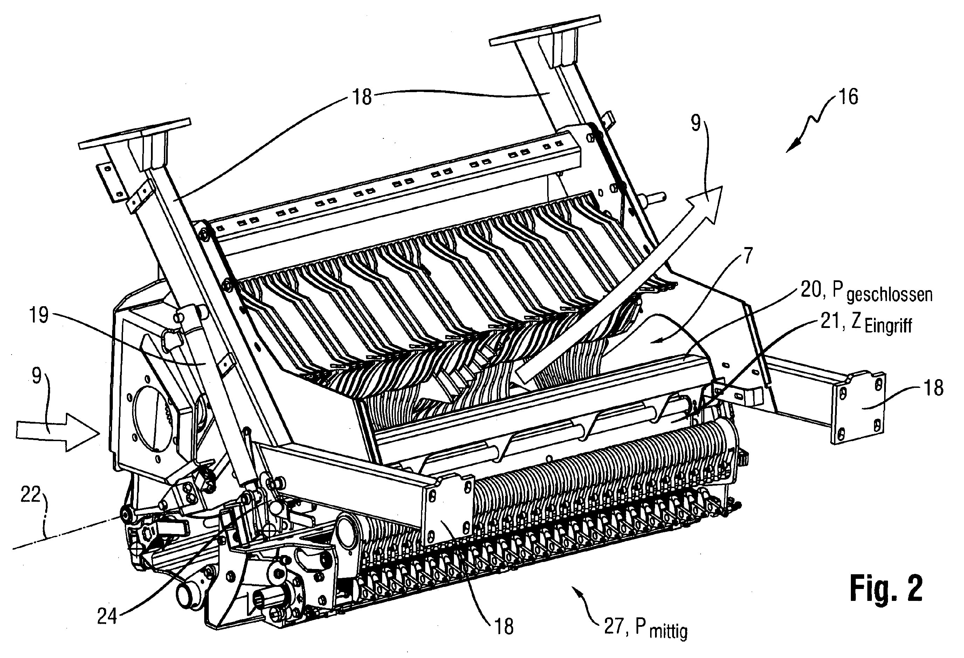

Die Fig. 2 bis 6 zeigen nun im Detail eine Schneidvorrichtung 16, die in eine Ballenpresse 1 gemäß Fig. 1 eingebaut sein kann, in verschiedenen Zuständen in perspektivischer Ansicht. Eine derartige Schneidvorrichtung kann auch in eine andere Erntemaschine, beispielsweise einen Ladewagen oder dergleichen eingebaut sein.

Dabei zeigt zunächst Fig. 2 eine Schneidvorrichtung 16, deren Bodenblech 20 sich in einer den Erntegutkanal 9 nach unten verschließenden Position P_{geschlossen} und deren Tragrahmen 21 sich in einem Eingriffszustand Z_{Eingriff} befindet. Wie der Darstellung entnehmbar, wird die Schneidvorrichtung 16 von einem Maschinenrahmen 18 getragen, der im gezeigten Ausführungsbeispiel beidseitig eines Rotors 7 angeordnete, in einem stumpfen Winkel miteinander verschweißte Trägerelemente mit Rechteckprofil umfasst. Der Rotor 7 mit einer Vielzahl daran befestigter Rotorsterne (nicht einzeln bezeichnet) ist drehbar gegenüber dem Maschinenrahmen 18 gelagert und über das Hauptgetriebe 13 der Ballenpresse 1 antreibbar.

Unmittelbar unterhalb des Rotors 7 erstreckt sich ein Gutleitelement in Form eines gebogenen Bodenblechs 20, das einen Erntegutkanal 9 (angedeutet durch die ein- und austretenden Pfeile 9) über dessen gesamte Breite nach unten begrenzt. Das Bodenblech 20 ist erfindungsgemäß um eine quer zum Erntegutkanal 9 verlaufende Schwenkachse 22 schwenkbar gegenüber dem Maschinenrahmen 18 gelagert. Im dargestellten Zustand befindet sich das Bodenblech 20 in einer den Erntegutkanal 9 nach unten verschließenden Position P_{geschlossen}. In dem Bodenblech 20 sind über dessen Breite eine Vielzahl schlitzartiger Ausnehmungen ausgebildet (in Fig. 2 aufgrund der geschlossenen Position P_{geschlossen} verdeckt), durch welche eine Anzahl von Messern 8 (in Fig. 2 ebenfalls verdeckt) in den Erntegutkanal 9 hineinragen kann, um durch den Erntegutkanal 9 gefördertes Erntegut in Zusammenwirkung mit dem Rotor 7 zu zerkleinern.

Zusätzlich zum Bodenblech 20 ist ein (in Fig. 2 nur teilweise sichtbarer) Tragrahmen 21 um die quer zum Erntegutkanal 9 verlaufende Schwenkachse 22 schwenkbar gegenüber dem Maschinenrahmen 18 gelagert. Der Tragrahmen 21 hält einen sich darunter befindlichen Messerträger 27, an dem die Vielzahl von Messern 8 (in Fig. 2 verdeckt) in Bezug auf den Erntegutkanal 9 in Reihe nebeneinander angeordnet sind. Aufgrund der Verschwenkbarkeit des Tragrahmens 21 um die Schwenkachse 22 ist auch der davon getragene Messerträger 27 um die Schwenkachse 22 verschwenkbar.

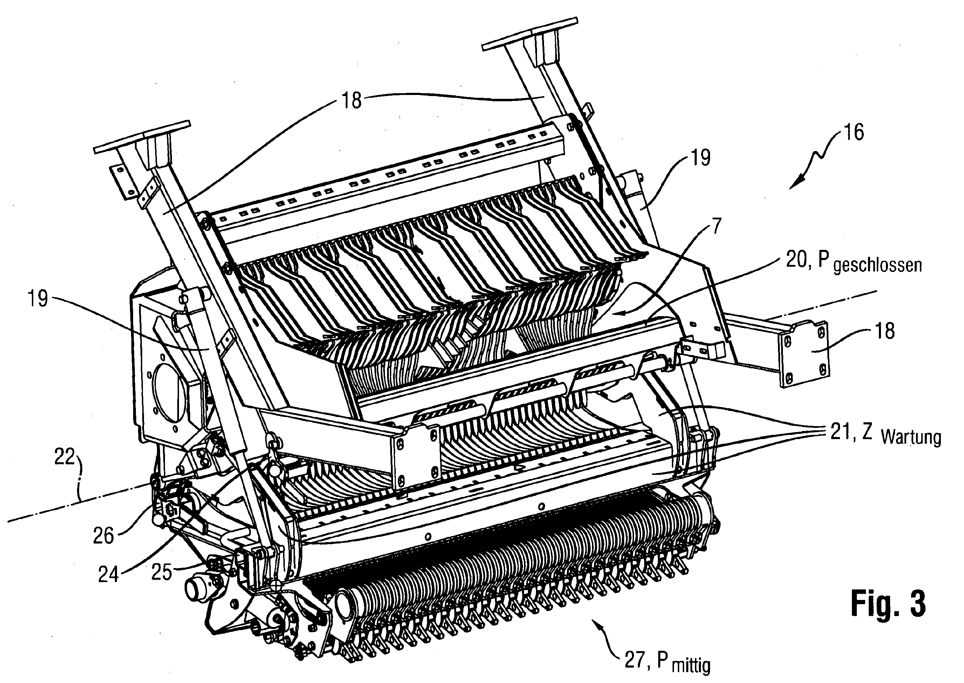

Zur Betätigung des Tragrahmens 21 dienen zwei beidseitig des Erntegutkanals 9 angeordnete hydraulische Stellzylinder 19 (in der perspektivischen Ansicht der Fig. 2 ist nur der linke Stellzylinder 19 sichtbar). Das Paar von Stellzylindern 19 wirkt zwischen dem Maschinenrahmen 18 und dem Tragrahmen 21 im Sinne einer Aktorik, um den Tragrahmen 21 aus einem in Fig. 2 dargestellten Eingriffszustand Z_{Eingriff}, in dem der Messerträger 27 seitlich von Seitenwänden des Erntegutkanals 9 eingeschlossen ist, in einen in Fig. 3 dargestellten Wartungszustand Z_{wartung} verschwenken zu können, in dem der Messerträger 27 in noch zu erläuternde seitliche Positionen bewegbar ist.

Dementsprechend zeigt Fig. 3 die Schneidvorrichtung 16, wobei der den Messerträger 27 haltende Tragrahmen 21 in einen Wartungszustand Z_{Wartung} verschwenkt ist (und damit auch besser sichtbar ist). Die beidseitigen Stellzylinder 19 sind im Unterschied zu Fig. 2 ausgefahren, so dass der Tragrahmen 21 mitsamt daran befestigtem Messerträger 27 gegenüber dem Erntegutkanal 9 (im Vergleich zu Fig. 2) abgesenkt ist. Das Bodenblech 20 ist befindet sich jedoch in der gleichen Position P_{geschlossen} wie in Fig. 2, ist nämlich mittels eines Feststellhebels 24 gegenüber dem Maschinenrahmen 18 arretiert. In dem in Fig. 3 gezeigten geöffneten Wartungszustand Z_{Wartung} des Tragrahmens 21 ist demnach ein zwischen dem abgesenkten Messerträger 27 und dem Bodenblech 20 befindlicher Bereich frei zugänglich. Im Betrieb aufgetretene Verunreinigungen durch Erntegut können in diesem Zustand einfach entfernt werden.

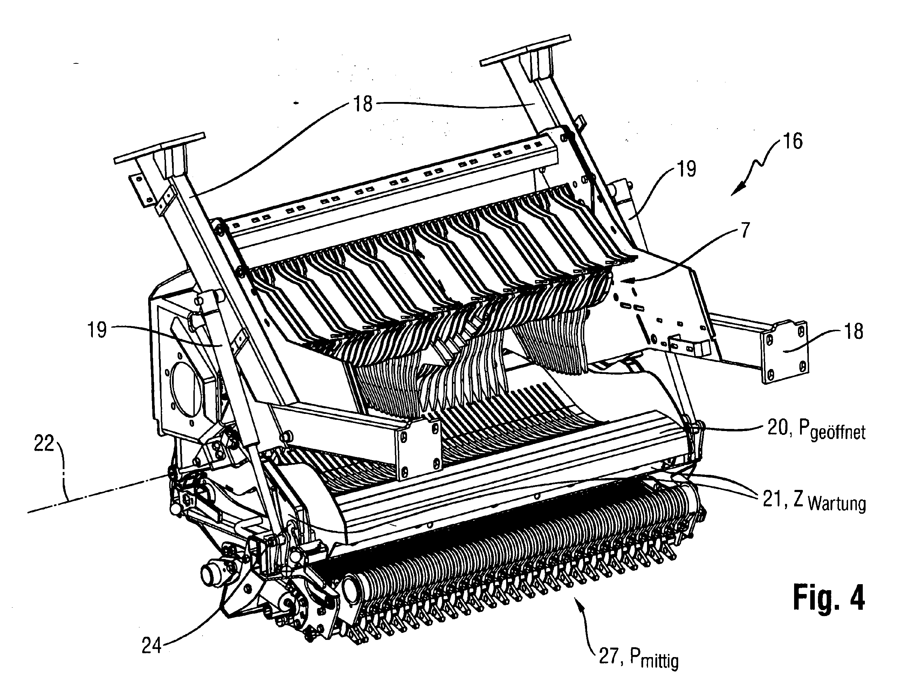

Fig. 4 zeigt nun einen Zustand der Schneidvorrichtung 16, bei dem gegenüber dem Zustand gemäß Fig. 3 das Bodenblech 20 um die Schwenkachse 22 in eine geöffnete Position P_{geöffnet} verschwenkt ist. Dazu wurde zuvor der Feststellhebel 24 gelöst, um das Bodenblech 20 aus dessen Arretierung gegenüber dem Maschinenrahmen 18 zu lösen. Schwerkraftbedingt befindet sich das Bodenblech 20 daher nun in einer geöffneten Position P_{geöffnet}, die durch den zwischen abgesenktem Bodenblech 20 und im Erntegutkanal 9 befindlichen Rotor 7 entstandenen Spalt auf komfortable Weise einen Zugang zu dem Rotor 7 ermöglicht. Der in Fig. 4 gezeigte Zustand, wonach sowohl der Messerträger 27 als auch das Bodenblech 20 abgesenkt sind, kann vorteilhaft eingenommen werden, um beispielsweise bei Überlastung des Erntegutkanals 9, d.h. bei Erntegutansammlungen bzw. dadurch bedingtem Stillstand der Gutförderung, den Erntegutkanal 9 und/oder den Rotor 7 von der Blockade zu befreien. Da sich die Schwenkachse 22 des Bodenblechs 20 in einem bezogen auf die Gutstromrichtung durch den Erntegutkanal 9 vorderen Bereich des Bodenblechs 20 befindet, kann vorteilhaft vorgesehen sein, dass die Stellzylinder 19 bei Überschreiten einer vorbestimmten Lastgrenze selbsttätig den Tragrahmen 21 mitsamt daran befestigtem Messerträger 27 öffnen. Zu diesem Zweck müsste selbstverständlich der Feststellhebel 24 geöffnet sein, um auch ein Absenken des Bodenblechs 20 zu ermöglichen. Daneben kann der Zustand gemäß Fig. 4 auch zu bloßen Wartungs- und/oder Reparaturzwecken am Rotor 7 oder an einem nachgelagerten Rafferkanal (vgl. Fig. 1, Bewegungsbereich des Raffers 10) eingenommen werden. Ein zuvor erforderlicher Abbau von Bauteilen oder sonstige umständliche Maßnahmen zur Verschaffung des Zugangs entfallen erfindungsgemäß in all diesen Fällen.

In den Fig. 2 bis 4 befindet sich der Messerträger 27 jeweils in einer mittigen Position P_{mittig} bezogen auf den Erntegutkanal 9, d.h. der Messerträger 27 ist zentral zwischen den Stellzylindern 19 angeordnet. Gemäß einer vorteilhaften Ausgestaltung der Erfindung ist der Messerträger 27 zudem in einer sich quer zum Erntegutkanal 9 erstreckenden Richtung linear beweglich gelagert, so dass sich dieser aus der in den Fig. 2 und 3 gezeigten mittigen Position P_{mittig} beidseitig in jeweils davon seitliche Positionen bewegen kann, in denen der Messerträger 27 jeweils zumindest zur Hälfte aus dem Erntegutkanal 9 hinausragt.

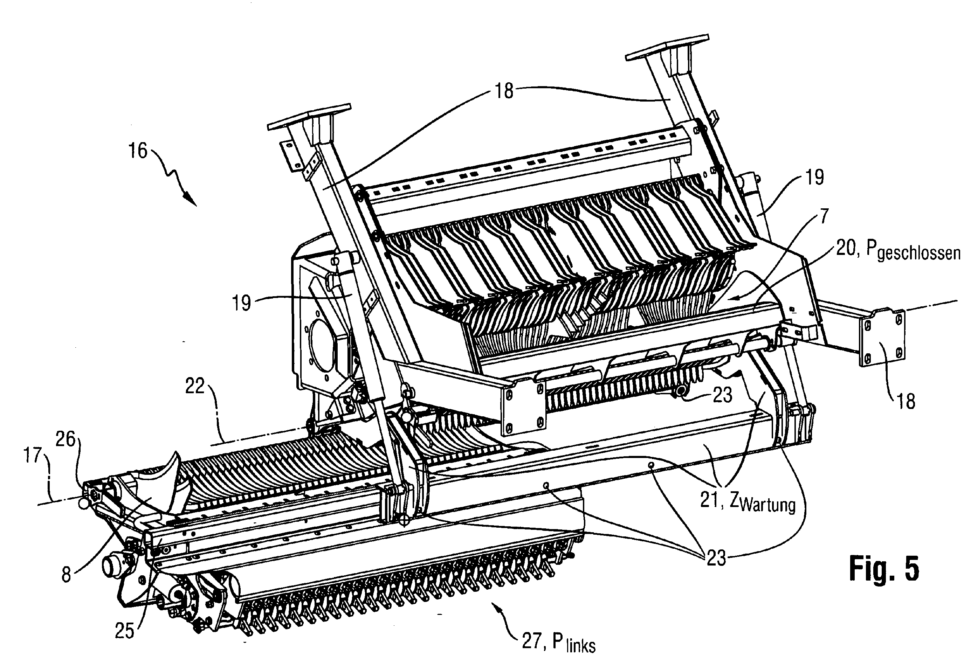

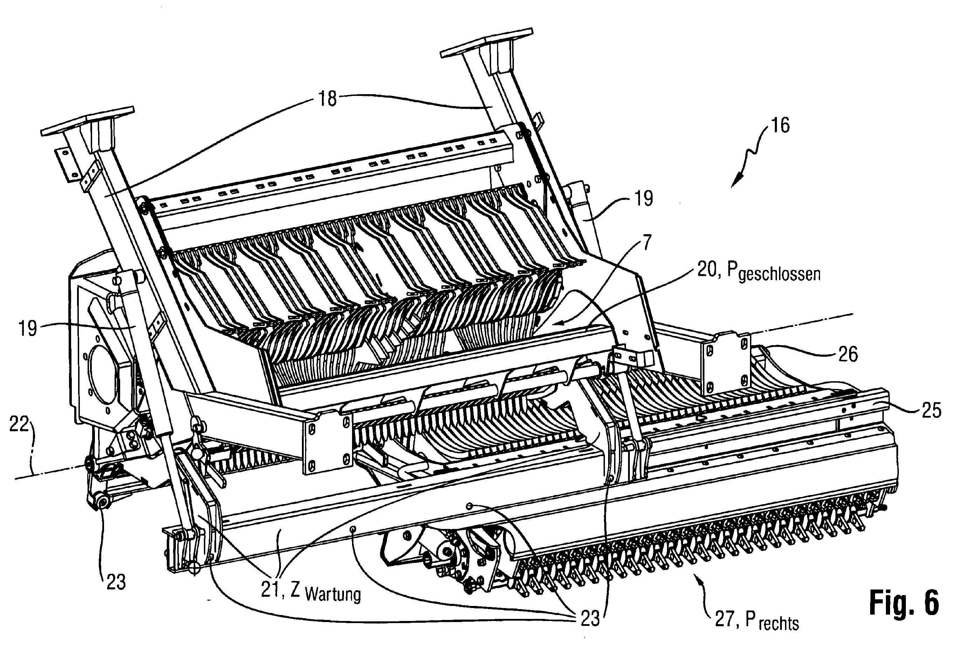

Dementsprechend zeigt Fig. 5 die Schneidvorrichtung 16, wobei der Messerträger 27 aus der mittigen Position P_{mittig} der Fig. 3 in eine linke Position Pₗᵢₙₖₛ bewegt wurde, und zeigt Fig. 6 die Schneidvorrichtung 16, wobei der Messerträger 27 aus der mittigen Position P_{mittig} der Fig. 3 in eine rechte Position P_{rechts} bewegt wurde.

Wie Fig. 5 und 6 zeigen, ist dazu der Messerträger 27 im Sinne einer Schublade ausgebildet, die gegenüber dem haltenden Tragrahmen 21 seitlich verschiebbar gelagert ist. Am Tragrahmen 21, der im Wesentlichen zwei seitliche Arme und zumindest eine diese verbindende Querstrebe umfasst, sind dazu mehrere über die Breite des Erntegutkanals 9 angeordnete Tragrollen 23 angeordnet. Wie in den Fig. 5 und 6 angedeutet, sind an einer hinteren Querstrebe des Tragrahmens 21 in gleichmäßigen Abständen vier Tragrollen 23 angeordnet. Der Messerträger 27, an dem eine Vielzahl von um eine Messerachse 17 schwenkbaren Messern 8 nebeneinander angeordnet ist, weist jeweils eine quer zum Erntegutkanal 9 verlaufende vordere Schiene 26 und eine quer zum Erntegutkanal 9 verlaufende hintere Schiene 25 auf. Die hintere Schiene 25 und die vordere Schiene 26 werden von den Tragrollen 23 des Tragrahmens 21 derart auf einer quer zum Erntegutkanal 9 verlaufenden Führungsbahn gehalten, dass sich der gesamte Messerträger 27 - im Wartungszustand Z_{Wartung} des Tragrahmens 21 - aus der mittigen Position P_{mittig} gemäß Fig. 3 in die linke Position Pₗᵢₙₖₛ gemäß Fig. 5, oder in die rechte Position P_{rechts} gemäß Fig. 6 bewegen lässt. In beiden Positionen Pₗᵢₙₖₛ bzw. P_{rechts} ragt der Messerträger 27 jeweils zu etwa 60% seiner Breite aus dem Erntegutkanal 9 seitlich hinaus.

Durch Einnahme der beiden Positionen Pₗᵢₙₖₛ bzw. P_{rechts} lassen sich demnach sämtliche Messer 8 bequem erreichen, um diese beispielsweise auszutauschen, zu reinigen oder um sich aus sonstigen Gründen Zugang zum Messerträger 27 zu verschaffen. Aufgrund der gleichmäßigen Anordnung der vier Tragrollen 23 wird die hintere Schiene 25 auch in den seitlichen Positionen Pₗᵢₙₖₛ bzw. P_{rechts} des Messerträgers 27 von jeweils zumindest zwei der Tragrollen 23 kontaktiert. So ist auch in den voll ausgefahrenen Positionen Pₗᵢₙₖₛ bzw. P_{rechts} ein sicherer Halt des Messerträgers 27 im Tragrahmen 21 gewährleistet. Da sich die Tragrollen 23 jeweils unterhalb der vorderen bzw. hinteren Schiene 26 bzw. 25 befinden, ist zudem gewährleistet, dass durch den Schneidvorgang anfallende Partikel, die beispielsweise durch die im Bodenblech 20 ausgebildeten schlitzartigen Ausnehmungen fallen, nicht mit den linearen Führungsmitteln, insbesondere den Tragrollen 23 sowie den damit zusammenwirkenden Schienen 25, 26 in Kontakt geraten und diese verunreinigen.

Zusammenfassend ergeben sich mit der flexibel zu nutzenden Erntemaschine folgende Vorteile. Im Rahmen des Betriebs der Erntemaschine, d.h. des Schneidvorgangs mit der Schneidvorrichtung, können im Wirkungsbereich des Rotors auftretende Überlasten durch Erntegut einfach kompensiert bzw. beseitigt werden, indem das Bodenblech abgesenkt wird. Überschüssiges Erntegut kann dann einfach aus dem Erntegutkanal austreten oder manuell entfernt werden, ohne dass bauliche Maßnahmen durchzuführen sind. Ebenso können ohne baulichen Aufwand ganz allgemeine Wartungsarbeiten am Rotor oder einem nachgelagerten Rafferkanal durchgeführt werden.

Zur Durchführung eines Messerwechsels kann wiederum das Bodenblech in seiner den Erntegutkanal verschließenden Position verbleiben während nur der den Messerträger haltende Tragrahmen in den Wartungszustand abgesenkt wird. Durch ggf. zusätzliches beidseitiges Verschieben des Messerträgers ist eine besonders komfortable Zugänglichkeit zu den Messern gegeben und kann der Messerträger einfach gereinigt werden.

Ist es erwünscht, die Erntemaschine mit einer abweichenden Messerzahl zu betreiben, kann durch bloßen Ersatz des Bodenblechs und des Messerträgers auf verhältnismäßig einfache Weise eine Umrüstung auf ein Schneidsystem mit abweichender Messerzahl (vorgegeben durch Bodenblech und Messerträger) erfolgen.

**Bezugszeichenliste**

| | | | |
|---|---|---|---|
| 1 | Ballenpresse | P_{geschlossen} | geschlossene Position |
| 2 | Erntegut | P_{geöffnet} | geöffnete Position |
| 3 | Ballen | P_{mittig} | mittige Position |
| 4 | Niederhalterollen | Pₗᵢₙₖₛ | linke Position |
| 5 | Aufsammeltrommel | P_{rechts} | rechte Position |
| 6 | Förderorgan | Z_{Eingriff} | Eingriffszustand |
| 7 | Rotor | Z_{Wartung} | Wartungszustand |
| 8 | Messer | | |
| 9 | Zuführkanal | | |
| 10 | Raffer | | |
| 11 | Presskammer | | |
| 12 | Knoteinrichtung | | |
| 13 | Hauptgetriebe | | |
| 14 | Hauptantriebswelle | | |
| 15 | Zugdeichsel | | |
| 16 | Schneidvorrichtung | | |
| 17 | Messerachse | | |
| 18 | Maschinenrahmen | | |
| 19 | Stellzylinder | | |
| 20 | Bodenblech | | |
| 21 | Tragrahmen | | |
| 22 | Schwenkachse | | |
| 23 | Tragrolle | | |
| 24 | Feststellhebel | | |
| 25 | hintere Schiene | | |
| 26 | vordere Schiene | | |
| 27 | Messerträger | | |

## Patentansprüche

1. Erntemaschine, insbesondere Ballenpresse (1) oder Ladewagen, mit einer Schneidvorrichtung (16) für landwirtschaftliches Erntegut (2), wobei die Schneidvorrichtung (16) eine Vielzahl von Messern (8), die in Bezug auf einen von Erntegut (2) durchströmten Erntegutkanal (9) in Reihe nebeneinander angeordnet sind und in einem Betriebszustand durch ein mit Ausnehmungen versehenes Gutleitelement (20) in den Erntegutkanal (9) hineinragen, sowie einen drehbar gelagerten antreibbaren Rotor (7) umfasst, der in kämmendem Eingriff mit zumindest einem der Messer (8) das Erntegut (2) zerkleinert, wobei
das Gutleitelement (20) um eine quer zum Erntegutkanal (9) verlaufende Schwenkachse (22) aus einer den Erntegutkanal (9) verschließenden Position (P_{geschlossen}) in eine geöffnete Position (P_{geöffnet})verschwenkbar ist, die einen Zugang zu dem Rotor (7) ermöglicht, **dadurch gekennzeichnet, dass** das Gutleitelement (20) und ein die Messer (8) haltender Tragrahmen (21) um eine gemeinsame Achse (22) schwenkbar jeweils gegenüber dem Maschinenrahmen (18) der Erntemaschine gelagert sind.

2. Erntemaschine nach Anspruch 1, **dadurch gekennzeichnet, dass** es sich bei dem Gutleitelement um ein den Erntegutkanal (9) nach unten begrenzendes Bodenblech (20) handelt.

3. Erntemaschine nach Anspruch 1 oder 2, **dadurch gekennzeichnet, dass** das Gutleitelement (20) in der den Erntegutkanal (9) verschließenden Position (P_{geschlossen}) arretierbar ist.

4. Erntemaschine nach einem der Ansprüche 1 bis 3, **dadurch gekennzeichnet, dass** sich die Schwenkachse (22) in einem bezogen auf die Gutstromrichtung durch den Erntegutkanal (9) vorderen Bereich des Gutleitelements (20) befindet.

5. Erntemaschine nach einem der Ansprüche 1 bis 4, **dadurch gekennzeichnet, dass** der Tragrahmen (21) einen die Vielzahl von Messern (8) aufnehmenden Messerträger (27) zu der gemeinsamen Achse (22) beabstandet hält, so dass dieser zwischen einem Eingriffszustand (Z_{Eingriff}) und einem Wartungszustand (Z_{Wartung}) verschwenkbar ist.

6. Erntemaschine nach einem der Ansprüche 1 bis 5, **dadurch gekennzeichnet, dass** der Tragrahmen (21) mittels einer geeigneten Aktorik, vorzugsweise mittels paarweise zwischen dem Maschinenrahmen (18) und dem Tragrahmen (21) wirkenden hydraulischen Stellzylindern (19), aus dem Eingriffszustand (Z_{Eingriff}) in den Wartungszustand (Z_{Wartung}) und umgekehrt verschwenkbar ist.

7. Erntemaschine nach Anspruch 5 oder 6, **dadurch gekennzeichnet, dass** der Tragrahmen (21) mitsamt davon gehaltenem Messerträger (27) und das Gutleitelement (20) voneinander entkoppelt um die gemeinsame Achse (22) verschwenkbar sind.

8. Erntemaschine nach einem der Ansprüche 5 bis 7, **dadurch gekennzeichnet, dass** der Tragrahmen (21) mitsamt davon gehaltenem Messerträger (27) und das Gutleitelement (20) miteinander verbindbar sind, um als Einheit gemeinsam um die Achse (22) verschwenkbar zu sein.

9. Erntemaschine nach einem der Ansprüche 5 bis 8, **dadurch gekennzeichnet, dass** der Messerträger (27) in einer sich quer zum Erntegutkanal (9) erstreckenden Richtung linear beweglich gelagert ist, so dass der Messerträger (27) aus einer bezogen auf den Erntegutkanal (9) mittigen Position (P_{mittig}) beidseitig in jeweils davon seitliche Positionen bewegbar ist, in denen der Messerträger (27) jeweils zumindest zur Hälfte aus dem Erntegutkanal (9) hinausragt.

10. Erntemaschine nach einem der Ansprüche 1 bis 9, **dadurch gekennzeichnet, dass** das Gutleitelement (20) und/oder der vom Tragrahmen (21) gehaltene Messerträger (27) als austauschbare Komponenten ausgeführt sind.

## Claims

1. A harvester, in particular a bale press (1) or loading wagon, comprising a cutting device (16) for agricultural crop material (2), wherein the cutting device (16) includes a plurality of blades (8) which are arranged in a row in mutually juxtaposed relationship in relation to a crop material passage (9) through which crop material (2) flows and which in an operating condition project into the crop material passage (9) through a material guide element (20) provided with openings, and a rotatably mounted drivable rotor (7) which comminutes the crop material (2) in meshing engagement with at least one of the blades (8), wherein the crop guide element (20) is pivotable about a pivot axis (22) extending transversely relative to the crop material passage (9) from a position (P_{geschlossen}) closing the crop material passage (9) into an opened position (P_{geöffnet}) which permits access to the rotor (7), **characterised in that** the crop guide element (20) and a carrier frame (21) holding the blades (8) are respectively mounted pivotably about a common axis (22) with respect to the machine frame structure (18) of the harvester.

2. A harvester according to claim 1 **characterised in that** the crop guide element is a floor plate (20) downwardly delimiting the crop material passage (9).

3. A harvester according to claim 1 or claim 2 **characterised in that** the crop guide element (20) can be arrested in the position (P_{geschlossen}) of closing the crop material passage (9).

4. A harvester according to one of claims 1 to 3 **characterised in that** the pivot axis (22) is in a region of the crop guide element (20), that is at the front in relation to the crop material flow direction through the crop material passage (9).

5. A harvester according to one of claims 1 to 4 **characterised in that** the carrier frame (21) holds a blade carrier (27) receiving the plurality of blades (8) in spaced relationship with the common axis (22) so that same is pivotable between an engagement condition (Z_{Eingriff}) and a maintenance condition (Z_{Wartung}).

6. A harvester according to one of claims 1 to 5 **characterised in that** the carrier frame (21) is pivotable by means of a suitable actuator, preferably by means of hydraulic control cylinders (19) operative in paired relationship between the machine frame structure (18) and the carrier frame (21) from the engagement condition (Z_{Eingriff}) into the maintenance condition (Z_{Wartung}) and vice-versa.

7. A harvester according to claim 5 or claim 6 **characterised in that** the carrier frame (21) together with the blade carrier (27) held thereby and the crop guide element (20) are pivotable about the common axis (22) in mutually uncoupled relationship.

8. A harvester according to one of claims 5 to 7 **characterised in that** the carrier frame (21) together with the blade carrier (27) held thereby and the crop guide element (20) can be connected together in order to be pivotable as a unit jointly about the axis (22).

9. A harvester according to one of claims 5 to 8 **characterised in that** the blade carrier (27) is mounted linearly moveably in a direction extending transversely relative to the crop material passage (9) so that the blade carrier (27) is moveable out of a position (P_{mittig}) which is central in relation to the crop material passage (9) on both sides into positions respectively lateral therefrom and in which the blade carrier (27) respectively projects at least in respect of half out of the crop material passage (9).

10. A harvester according to one of claims 1 to 9 **characterised in that** the crop guide element (20) and/or the blade carrier (27) held by the carrier frame (21) are in the form of exchangeable components.

## Revendications

1. Machine de récolte, en particulier presse à balles (1) ou véhicule de chargement, comprenant un dispositif de coupe (16) pour du produit agricole de récolte (2), le dispositif de coupe (16) comprenant une pluralité de couteaux (8), qui sont disposés côte à côte sur une rangée par rapport à un canal de produit de récolte (9) traversé par du produit de récolte (2) et qui, dans un état de fonctionnement, font saillie dans le canal de produit de récolte (9) à travers un élément de guidage de produit (20) pourvu d'évidements, ainsi qu'un rotor entraîné (7) monté en rotation qui, en prise engrenée avec au moins un des couteaux (8), broie le produit de récolte (2), l'élément de guidage de produit (20) pouvant pivoter, autour d'un axe de pivotement (22) s'étendant transversalement au canal de produit de récolte (9), depuis une position (P_{fermée}) fermant le canal de produit de récolte (9) vers une position ouverte (Pₒᵤᵥₑᵣₜₑ) qui permet d'accéder au rotor (7), **caractérisée en ce que** l'élément de guidage de produit (20) et un châssis porteur (21) portant les couteaux (8) sont chacun montés pivotants autour d'un axe commun (22) par rapport au bâti de machine (18) de la machine de récolte.

2. Machine de récolte selon la revendication 1, **caractérisée en ce que** l'élément de guidage de produit est une tôle de fond (20) limitant le canal de produit de récolte (9) vers le bas.

3. Machine de récolte selon la revendication 1 ou 2, **caractérisée en ce que** l'élément de guidage de produit (20) peut être bloqué dans la position (P_{fermée}) fermant le canal de produit de récolte (9).

4. Machine de récolte selon une des revendications 1 à 3, **caractérisée en ce que** l'axe de pivotement (22) se trouve dans une zone de l'élément de guidage de produit (20) située à l'avant par rapport à la direction du flux de produit à travers le canal de produit de récolte (9).

5. Machine de récolte selon une des revendications 1 à 4, **caractérisée en ce que** le châssis porteur (21) supporte, à distance de l'axe commun (22), un porte-couteaux (27) qui reçoit la pluralité de couteaux (8), ce sorte qu'il peut pivoter entre un état engrené (Z_{engrené}) et un état d'entretien (Zₑₙₜᵣₑₜᵢₑₙ).

6. Machine de récolte selon une des revendications 1 à 5, **caractérisé en ce que** le châssis porteur (21) peut pivoter de l'état engrené (Z_{engrené}) vers l'état d'entretien (Zₑₙₜᵣₑₜᵢₑₙ) et inversement au moyen d'un ensemble d'actionneurs appropriés, de préférence au moyen de vérins de réglage hydrauliques (19) agissant par paires entre le bâti de machine (18) et le châssis porteur (21).

7. Machine de récolte selon la revendication 5 ou 6, **caractérisée en ce que** le châssis porteur (21), avec le porte-couteaux (27) supporté par celui-ci, et l'élément de guidage de produit (20) peuvent pivoter autour de l'axe commun (22) en étant découplés l'un de l'autre.

8. Machine de récolte selon une des revendications 5 à 7, **caractérisée en ce que** le châssis porteur (21), avec le porte-couteaux (27) supporté par celui-ci, et l'élément de guidage de produit (20) peuvent être reliés entre eux pour pouvoir pivoter conjointement, sous la forme d'une unité, autour de l'axe (22).

9. Machine de récolte selon une des revendications 5 à 8, **caractérisée en ce que** le porte-couteaux (27) est monté linéairement mobile dans une direction s'étendant transversalement au canal de produit de récolte (9), de sorte que le porte-couteaux (27) peut se déplacer des deux côtés depuis une position (P_{centrée}) centrée par rapport au canal de produit de récolte (9) vers des positions latérales à celui-ci dans lesquelles le porte-couteaux (27) dépasse à chaque fois du canal de produit de récolte (9) d'au moins la moitié de sa longueur.

10. Machine de récolte selon une des revendications 1 à 9, **caractérisée en ce que** l'élément de guidage de produit (20) et/ou le porte-couteaux (27) supporté par le châssis porteur (21) sont conformés en composants échangeables.
